(19) Europäisches Patentamt
European Patent Office
Office européen des brevets

(11) **EP 3 720 649 B1**

(12) **EUROPÄISCHE PATENTSCHRIFT**

(45) Veröffentlichungstag und Bekanntmachung des Hinweises auf die Patenterteilung:
**03.01.2024   Patentblatt 2024/01**

(21) Anmeldenummer: **18814774.8**

(22) Anmeldetag: **15.11.2018**

(51) Internationale Patentklassifikation (IPC):
**B23K 35/02** (2006.01)    **C22C 19/05** (2006.01)
**B23K 35/362** (2006.01)    **B23K 35/30** (2006.01)
**B23K 35/40** (2006.01)

(52) Gemeinsame Patentklassifikation (CPC):
**C22C 19/055; B23K 35/304;** B23K 35/0261;
B23K 35/40

(86) Internationale Anmeldenummer:
**PCT/DE2018/100933**

(87) Internationale Veröffentlichungsnummer:
**WO 2019/110041 (13.06.2019 Gazette 2019/24)**

(54) **SCHWEISSZUSATZWERKSTOFF**

WELD MATERIAL

MATÉRIAU D'APPORT DE SOUDAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2017   DE 102017129218**

(43) Veröffentlichungstag der Anmeldung:
**14.10.2020   Patentblatt 2020/42**

(73) Patentinhaber: **VDM Metals International GmbH 58791 Werdohl (DE)**

(72) Erfinder: **WOLF, Martin 44267 Dortmund (DE)**

(56) Entgegenhaltungen:
**EP-A1- 1 004 684        EP-A1- 2 305 415
WO-A1-2015/153905    JP-A- 2001 107 196**

**Beschreibung**

Die Erfindung betrifft einen Schweißzusatzwerkstoff.

Das Schweißen von un- und niedriglegierten Stählen, welche mit Walz-, Spreng- oder Schweißplattierungen aus hochlegierten Stählen oder Nickellegierungen versehen wurden, benötigt aus metallurgischen Gründen unter bestimmten Voraussetzung und unter Berücksichtigung der Aufmischung mit dem C-Stahl-Substratwerkstoff ein vollaustenitisches Schweißgut. Die Verwendung von Schweißzusatzwerkstoffen auf Nickelbasis ist in solchen Fällen unumgänglich. Damit sich bei mechanischen Beanspruchungen quer zur Schweißnaht elastische und plastische Dehnungen nicht bevorzugt in der Schweißnaht konzentrieren und somit zu einem Bauteilversagen in der Schweißnaht führen, muss das Schweißgut aus einer Nickelbasislegierung zudem eine höhere Streckgrenze aufweisen als der umgebende Grundwerkstoff.

Es ist also beim Schweißen plattierter Bleche unter bestimmten Gegebenheiten erforderlich, einen Schweißzusatzwerkstoff auf Nickelbasiswerkstoff einzusetzen, der im Schweißgut eine höhere Streckgrenze aufweist als der umgebende Kohlenstoffstahl. Da die Entwicklung der Kohlenstoffstähle durch Verfeinerungen der chemischen Zusammensetzung und/oder durch Optimierung des Herstellungsprozesses zu immer höheren Streckgrenzen geführt hat, ist es notwendig, auch Schweißzusatzwerkstoff auf Nickelbasis einzusetzen, die mit den Entwicklungen im Bereich Kohlenstoffstähle Schritt halten.

Bislang wird zum Verbindungsschweißen plattierter Bleche unter den o.g. Voraussetzungen oftmals der Schweißzusatzwerkstoff FM 625 (ISO 18274 - S NI 06625) eingesetzt. Dieser weist im Schweißgut eine Streckgrenze von ca. 510 MPa bis 580 MPa auf und eignet sich unter Berücksichtigung der notwendigen Sicherheitsreserve zum Schweißen von Kohlenstoffstählen mit einer Streckgrenze bis 460 MPa.

Die WO 2015/153905 A1 offenbart ein hochfestes Ni-Cr-Mo-W-Nb-Ti-Schweißprodukt mit (in Gew.-%) 17,0 - 23,0 % Chrom, 5,0 - 12,0 % Molybdän, 3,0 - 11,0 % Wolfram, 3,0 - 5,0 % Niob, 0 - 2,0 % Tantal, 1,2 - 3,0 % Titan, 0,005 - 1,5 % Aluminium, 0,0005 - 0,1 % Kohlenstoff, weniger als 2 % Eisen, weniger als 5 % Kobalt, Rest Nickel, wobei der Nickelgehalt im Bereich zwischen 56 und 65 % angesiedelt ist. Das Schweißgut soll eine minimale Streckgrenze von 496 MPa haben.

Bedingt durch den hohen Mindest-Titangehalt wird für diesen Werkstoff eine ungenügende Kerbschlagarbeit erreicht, da Titan ein stark phasenbildendes Element mit dem Basiselement Nickel (Gamma'-Phase) darstellt. Hierdurch wird zwar die Streckgrenze des Schweißgutes erhöht, jedoch führt das Aushärten über die Gamma'-Phase bekanntermaßen zur starken Versprödung des Werkstoffes. Darüber hinaus ist die Wirkung des Titans als Gamma'-Phasenbildner aufgrund der Reaktionskinetik, die durch die Schweißwärme ausgelöst wird, stark von der Wärmeführung des Schweißprozesses abhängig. Damit unterliegen die erzielbaren Werte für die Streckgrenze starken Schwankungen, wodurch die garantierte Mindeststreckgrenze für den praktischen Einsatz stark eingeschränkt werden muss.

Der Erfindung liegt die Aufgabe zugrunde, einen alternativen Schweißzusatzwerkstoff bereitzustellen, der neben einer guten Schweißbarkeit und Korrosionsbeständigkeit auch eine gegenüber dem Stand der Technik verbesserte Kerbschlagarbeit und höhere Streckgrenze aufweist.

Diese Aufgabe wird gelöst durch einen Schweißzusatzwerkstoff mit (in Gew.-%) Schweißzusatzwerkstoff mit (in Gew.-%)

| | |
|---|---|
| C | 0,01 - 0,05 % |
| N | 0,05 - 0,10 % |
| Cr | 20,0 - 23,0 % |
| Mn | 0,25 - 0,50 % |
| Si | 0,04 - 0,10 % |
| Mo | 8,0 - 10,5 % |
| Ti | 0,75 - 1,0 % |
| Nb | 3,0 - 5,0 % |
| Fe | max. 1,5 % |
| Al | 0,03 - 0,50 % |
| W | 4,0 - 5,0 % |
| Ta | max. 0,5 % |
| Co | max. 1,0 % |
| Zr | 0,10 - 0,70% |
| Ni | Rest sowie erschmelzungsbedingte Verunreinigungen |
| P | max. 0,05 % |
| S | max. 0,01 % |

(fortgesetzt)

| V | max. 0,05 % |
| --- | --- |

Vorteilhafte Weiterbildungen des erfindungsgemäßen Werkstoffs sind den Unteransprüchen zu entnehmen.

Die Erfindung betrifft einen Schweißzusatzwerkstoff aus einer Nickelbasislegierung, die sich dafür eignet, Schweißgüter mit einer sehr hohen mechanischen Streckgrenze zu erzeugen. Der Schweißzusatzwerkstoff erreicht im Schweißgut diese sehr hohe Streckgrenze ohne nachträgliche weitere Wärmebehandlung.

Das Element Eisen ist mit max. 1,5 % angegeben, wobei auch Gehalte ≤ 1,2 %, insbesondere ≤ 0,9 % möglich sind.

Einem weiteren Gedanken der Erfindung gemäß hat der Werkstoff eine Streckgrenze, Rp 0,2 oberhalb von 610 MPa im thermisch unbehandelten Schweißgut. Der erfindungsgemäße Werkstoff unterscheidet sich vom Stand der Technik durch die modifizierten Titan- und Zirkongehalte, wobei das Element Stickstoff hier bewusst zulegiert wird.

Bei den Untersuchungen des erfindungsgemäßen Werkstoffs wurde festgestellt, dass ein Titangehalt von 0,75 % - 1,0 % einerseits einen Beitrag zur Erhöhung der Streckgrenze leistet, jedoch keine übermäßige Versprödung des Schweißguts mit sich bringt. Darüber hinaus wurde festgestellt, dass die Abhängigkeit der mechanisch-technologischen Werte im Schweißgut von der Wärmeführung beim Schweißen weitgehend unabhängig ist.

Das Element Zirkon ist in einer Spanne zwischen 0,10 % und 0,70 % angegeben. Gehalte im Bereich zwischen 0,30 % und 0,65 % sind hier bevorzugte Bereiche. Untersuchungen haben in diesem Zusammenhang ergeben, dass bevorzugt Zr mit dem Legierungselement C Karbide bildet, die fein-dispers vorliegen und damit außerordentlich festigkeitssteigernd sind (Bild 2). Diese Erkenntnis ist insofern neu, da Zr als Legierungselement bislang nur bei Hochtemperatur- bzw. Heizleiterlegierungen Verwendung findet. Es ist in diesem Zusammenhang bekannt, dass Zr bei Hochtemperatur- bzw. Heizleiterlegierungen die Hochtemperatur-Zeitstandfestigkeit und Anhaftung von Zunderschichten verbessern kann. Bislang ist jedoch nicht bekannt, dass Zr die mechanischen Eigenschaften bei Raum- und darunterliegenden Temperaturen eines Schweißzusatzwerkstoffes signifikant zu verbessern vermag.

Stickstoff wird zwischen 0,05 % und 0,10 % angegeben. N ist ein Element welches interstitiell gelöst die Loch- und Spaltkorrosionsbeständigkeit des Werkstoffs sehr stark steigert. N bildet aber auch mit Ti fein-disperses TiN (Bild 2). Untersuchungen haben ergeben, dass sich durch die Kombination von Stickstoff und Titan durch Bildung von Titannitrit die Streckgrenze stark erhöht. Darüber hinaus wird durch die Zugabe von Stickstoff verhindert, dass Ti mit Ni die Gamma'-Phase bildet, was zu o.g. Nachteilen führt.

Es stellte sich in den Untersuchungen überraschenderweise heraus, dass neben den Mischkristallhärtenden Elementen Cr, Mo, Nb erst durch die Summe der Karbid- und Nitrid-bildenden Legierungselemente Zr, N, C, Ti, Nb eine Wirkung erreicht wird, mit der die Ziel-Mindeststreckgrenze im thermisch unbehandelten Schweißgut bei gleichzeitig guter Duktilität erreicht werden kann.

Verunreinigungen sind in der erfindungsgemäßen Legierung wie folgt enthalten:

| P | max. 0,05 % |
| --- | --- |
| S | max. 0,01 % |
| V | max. 0,05 % |

Die Kombination aus hoher Streckgrenze und guter Duktilität wird dann erreicht, wenn folgende Verhältnisse (Angaben in mass-%) der Elemente Zr, N, C, Ti, Nb eingehalten werden:

$$[Zr] / [C] > 7, \text{ vorteilhafter } > 10$$

$$[Ti] / [N] > 10$$

$$[Nb] / [C] > 100, \text{ insbesondere } > 150$$

Die Manganzugabe verbessert durch die Bildung von MnS die Heißrisssicherheit. Darüber hinaus stellte sich heraus, dass Mangan ebenfalls einen Beitrag zur Erhöhung der Streckgrenze im Schweißguts leistet.

Bei den Untersuchungen des erfindungsgemäßen Werkstoffs wurde festgestellt, dass mindestens 0,04 % Silizium für eine gute Schweißbarkeit benötigt werden, Silizium jedoch nicht größer als 0,10 % sein darf, um die Heißrisssicherheit nicht zu verschlechtern.

Mit der erfindungsgemäßen Zusammensetzung hergestellte Laborschmelzblöcke mit Chargengrößen von 100 kg (Tabelle 2) ließen sich problemlos warmwalzen, wobei festgestellt wurde, dass die Warmwalztemperatur vorzugsweise zwischen 950°C und 1180°C liegen soll. Die warmgewalzten Laborschmelzblöcke ließen sich anschließend mechanisch zu den gewünschten Abmessungen weiter- und endbearbeiten.

Aus den gewalzten Laborblechen mit den Zusammensetzungen in Tabelle 1 und 2 wurden dünne Vierkantstäbe mit einer Kantenlänge von ca. 4 mm geschnitten. Mit diesen Vierkantstäben wurde mittels des WIG-Verfahrens eine Schweißgutprobe nach ISO 15792-1 hergestellt und anschließend die mechanisch-technologischen Prüfungen durchgeführt. Die Ergebnisse der Untersuchungen sind in Tabelle 1 und 3 genannt.

Tabelle 1: Untersuchte Legierungen (Laborchargen - 10 kg)

| Lab. Nr. | W | Co | C | Mn | Ti | N | Zr | Rp0,2 [MPa] | KV2 (RT, J) | KV2 (-196°C, J) |
|---|---|---|---|---|---|---|---|---|---|---|
| 250441 | 3 | 15 | | | | | | 586 | 105 | 74 |
| 250442 | 3 | 10 | | | | | | 552 | 112 | 55 |
| 250443 | 4 | 10 | | | | | | 537 | 105 | 89 |
| 250445 | 3 | 10 | 0,03 | | | | | 561 | 98 | 73 |
| 250446 | 3 | 5 | 0,03 | | | | | 524 | 94 | 80 |
| 250447 | | | | 10 | 1,5 | | | 644 | 24 | 14 |
| 250478 | | | | | 0,5 | 0,5 | | 586 | 100 | 84 |
| 250479 | | | | | 1 | 0,5 | | 612 | 77 | 75 |
| 250484 | | | | | 1 | 0,2 | | 601 | 67 | 59 |
| 250486 | 3 | | | | 1 | 0,1 | | 578 | 81 | 54 |
| 250487 | 3 | | 0,03 | | | 0,1 | 0,5 | 644 | 97 | 87 |
| 250488 | 3 | 5 | 0,03 | | | 0,1 | 0,2 | 623 | 105 | 89 |

Tabelle 2: Schmelzanalyse der Technikums-Charge PV864 (100 kg)

| Chem. Element | PV 864 |
|---|---|
| C | 0,020 |
| Si | 0,070 |
| Mn | 0,350 |
| P | 0,010 |
| S | 0,0020 |
| Al | 0,0700 |
| Cu | 0,0100 |
| Cr | 22,00 |
| Ni | 58,00 |
| Mo | 9,300 |
| V | 0,020 |
| Ti | 0,900 |
| Nb | 3,300 |
| Co | 0,0300 |
| Fe | 1,00 |
| W | 4,40 |

(fortgesetzt)

| Chem. Element | PV 864 |
|---|---|
| N | 0,0670 |
| Zr | 0,60 |

Tabelle 3: Mechn. Techn. Werte des reinen Schweißgutes aus Technikums-Charge PV864

| PV 864 | Rp0,2 (Mpa) | RP1,0 (Mpa) | RM (Mpa) | A5 (%) | KV2 (RT, J) |
|---|---|---|---|---|---|
| SG-Probe 1 | 654 | 701 | 877 | 34 | 121 |
| Sg-Probe 2 | 646 | 690 | 848 | 31 | 112 |

**Patentansprüche**

1. Schweißzusatzwerkstoff mit, in Gew.-%,

| | |
|---|---|
| C | 0,01 - 0,05 % |
| N | 0,05 - 0,10 % |
| Cr | 20,0 - 23,0 % |
| Mn | 0,25 - 0,50 % |
| Si | 0,04 - 0,10 % |
| Mo | 8,0 - 10,5 % |
| Ti | 0,75 - 1,0 % |
| Nb | 3,0 - 5,0 % |
| Fe | max. 1,5 % |
| Al | 0,03 - 0,50 % |
| W | 4,0 - 5,0 % |
| Ta | max. 0,5 % |
| Co | max. 1,0 % |
| Zr | 0,10 - 0,70 % |
| Ni | Rest sowie erschmelzungsbedingte Verunreinigungen |
| P | max. 0,05 % |
| S | max. 0,01 % |
| V | max. 0,05 % |

2. Schweißzusatzwerkstoff nach Anspruch 1 mit, in Gew.-%, Fe $\leq$ 1,2 %, insbesondere $\leq$ 0,9%.

3. Schweißzusatzwerkstoff nach Anspruch 1 oder 2 mit, in Gew.-%, Zr 0,3 - 0,65 %.

4. Schweißzusatzwerkstoff nach einem der Ansprüche 1 bis 3, wobei die Legierung folgender Bestimmung genügt, in Gew.-%: Zr/C > 7, insbesondere > 10.

5. Schweißzusatzwerkstoff nach einem der Ansprüche 1 bis 4, wobei die Legierung folgender Bestimmung genügt, in Gew.-%: Ti/N > 10

6. Schweißzusatzwerkstoff nach einem der Ansprüche 1 bis 5, wobei die Legierung folgender Bestimmung genügt, in Gew.-%: Nb/C > 100, insbesondere > 150.

7. Schweißzusatzwerkstoff nach einem der Ansprüche 1 bis 6, der eine Streckgrenze Rp 0,2 > 610 MPa, insbesondere 640 MPa, im thermisch unbehandelten Schweißgut aufweist.

**Claims**

1. Weld material with, in % by weight

| | |
|---|---|
| C | 0.01-0.05% |
| N | 0.05-0.10% |
| Cr | 20.0-23.0% |
| Mn | 0.25-0.50% |
| Si | 0.04-0.10% |
| Mo | 8.0-10.5% |
| Ti | 0.75-1.0% |
| Nb | 3.0-5.0% |
| Fe | max. 1.5% |
| Al | 0.03-0.50% |
| W | 4.0-5.0% |
| Ta | max. 0.5% |
| Co | max. 1.0% |
| Zr | 0.10-0.70% |
| Ni | remainder, and impurities resulting from the smelting process |
| P | max. 0.05% |
| S | max. 0.01% |
| V | max. 0.05%. |

2. Weld material according to Claim 1 with, in % by weight Fe $\leq$ 1.2%, in particular $\leq$ 0.9%.

3. Weld material according to Claim 1 or 2 with, in % by weight Zr 0.3-0.65.

4. Weld material according to any one of Claims 1 to 3, wherein the alloy satisfies the following condition, in % by weight Zr/C >7, in particular >10.

5. Weld material according to any one of Claims 1 to 4, wherein the alloy satisfies the following condition, in % by weight Ti/N >10.

6. Weld material according to any one of Claims 1 to 5, wherein the alloy satisfies the following condition, in % by weight Nb/C > 100, in particular > 150.

7. Weld material according to any one of Claims 1 to 6, which has a yield strength Rp 0.2 > 610 MPa, in particular 640 MPa, in the thermally untreated weld metal.

**Revendications**

1. Matériau d'apport de soudage avec en %/poids :

| | |
|---|---|
| C | 0,01 - 0,05 % |
| N | 0,05 - 0,10 % |
| Cr | 20,0 - 23,0 % |
| Mn | 0,25 - 0,50 % |
| Si | 0,04 - 0,10 % |
| Mo | 8,0 - 10,5 % |
| Ti | 0,75 - 1,0 % |
| Nb | 3,0 - 5,0 % |

(suite)

| Fe | max 1,5 % |
| Al | 0,03 - 0,50 % |
| W | 4,0 - 5,0 % |
| Ta | max. 0,5 % |
| Co | max. 1,0 % |
| Zr | 0,10 - 0,70 % |
| Ni | Résidus ainsi qu'impuretés dues à la fusion |
| P | max. 0,05 % |
| S | max. 0,01 % |
| V | max. 0,05 % |

2.  Matériau d'apport de soudage selon la revendication 1 avec en %/poids Fe ≤ 1,2 %, en particulier ≤ 0,9 %.

3.  Matériau d'apport de soudage selon la revendication 1 ou 2, avec en %/poids Zr 0,3 - 0,65 %.

4.  Matériau d'apport de soudage selon l'une quelconque des revendications 1 à 3, sachant que l'alliage de dosage suivant est suffisant en %/poids : Zr/C >7, en particulier > 10.

5.  Matériau d'apport de soudage selon l'une quelconque des revendications 1 à 4, sachant que l'alliage de dosage suivant est suffisant en %/poids : Ti/N > 10.

6.  Matériau d'apport de soudage selon l'une quelconque des revendications 1 à 5, sachant que l'alliage de dosage suivant est suffisant en %/poids : Nb/C > 100, en particulier > 150.

7.  Matériau d'apport de soudage selon l'une quelconque des revendications 1 à 6, qui comporte une limite d'élasticité de Rp 0,2 > 610 MPa, en particulier de 640 MPa, dans le matériau de soudure thermiquement non traité.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015153905 A1